# EUROPEAN PATENT APPLICATION

(11) **EP 4 610 766 A1**
(43) Date of publication of application: **03.09.2025**
(21) Application number: 22963520.6
(22) Date of filing: 28.10.2022
(51) Int. Cl.: G05D 3/00, H02P 23/14, H02P 29/00

(54) **PARAMETER DETERMINATION DEVICE AND PARAMETER DETERMINATION METHOD**

(71) Applicant: SMC CORPORATION, Tokyo 101-0021 (JP)
(72) Inventor: SAKAMURA, Miki, Tsukubamirai-shi, Ibaraki 300-2493 (JP)
(74) Representative: Keil & Schaafhausen Patentanwälte PartGmbB
(86) International application number: PCT/JP2022/040340
(87) International publication number: WO 2024/089873

(57) **Abstract**

The present invention provides a parameter determination device (10) for an actuator (20) including a movable member (52) and a motor (54), the parameter determination device (10) comprising: an input parameter acquisition unit (120) that acquires an input parameter pertaining to a target position (G) and movement speed of the movable member; a torque acquisition unit (126) that acquires the torque of the motor at a cycle time (Tc) until the movable member reaches the target position as a result of the motor moving the movable member on the basis of the input parameter; and a determination unit (128) that determines the suitability of the input parameter on the basis of the torque.

## Description

### TECHNICAL FIELD

The present invention relates to a parameter determination device and a parameter determination method.

### BACKGROUND ART

JP 2012-108608 A discloses a drive controller for an actuator. The drive controller for an actuator performs drive control of the actuator. The actuator is provided with a displacement member and a drive unit. The drive unit is, for example, a linear motor and displaces the displacement member. The drive controller for an actuator determines the detailed motions of the displacement member by setting a displacement distance and a displacement time.

### SUMMARY OF THE INVENTION

The drive controller for the actuator disclosed in JP 2012-108608 A determines the detailed motions of the displacement member as described above using information (weight, posture, load, etc.) of a workpiece piece conveyed or pressed by the displacement member. There is a problem that the detailed motions of the displacement member thus determined is not always appropriate.

The present invention has the object of solving the aforementioned problems.

A first aspect of the present invention is a parameter determination device for an actuator including a fixed member, a movable member movable with respect to the fixed member, and a motor configured to move the movable member, comprising: an input parameter acquisition unit configured to acquire an input parameter related to a target position and a moving speed of the movable member; a torque acquisition unit configured to acquire, as a result of the motor moving the movable member based on the input parameter, torque of the motor in a cycle time that ranges from when the movable member starts movement to when the movable member arrives at the target position; and a determination unit configured to determine whether the input parameter is appropriate, based on the torque.

A second aspect of the present invention is a parameter determination method for an actuator including a fixed member, a movable member movable with respect to the fixed member, and a motor configured to move the movable member, comprising: an input parameter acquisition step of acquiring an input parameter related to a target position and a moving speed of the movable member; a torque acquisition step of acquiring, as a result of the motor moving the movable member based on the input parameter, torque of the motor in a cycle time that ranges from when the movable member starts movement to when the movable member arrives at the target position; and a determination step of determining whether the input parameter is appropriate, based on the torque.

According to the present invention, suitable control parameters of an actuator can be determined.

### BRIEF DESCRIPTION OF DRAWINGS

[FIG. 1] FIG. 1 is a diagram for explaining a parameter determination device according to an embodiment;
[FIG. 2] FIG. 2 is a block diagram illustrating a configuration of the parameter determination device;
[FIG. 3] FIG. 3 is a diagram showing an example of a parameter setting screen in which input parameters are input;
[FIG. 4] FIG. 4 is a diagram showing an example of a parameter setting screen for a user to instruct a stroke test based on input parameters;
[FIG. 5] FIG. 5 is a diagram showing an example of a parameter setting screen for a user to select whether to extend a cycle time;
[FIG. 6] FIG. 6 is a diagram showing an example of a parameter setting screen displayed when the cycle time is extended;
[FIG. 7] FIG. 7 is a diagram showing an example of a parameter setting screen for outputting corrected input parameters to a controller as setting parameters of an actuator; and [FIG. 8] FIG. 8 is a flowchart showing a processing procedure of a control parameter appropriateness determination process performed by a parameter determination device.

### DETAILED DESCRIPTION OF THE INVENTION

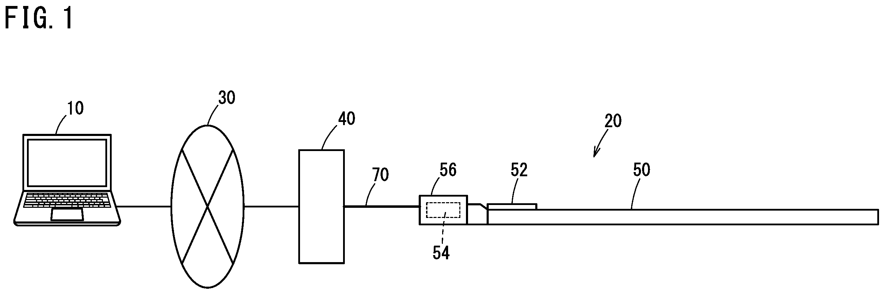

FIG. 1 is a diagram for explaining a parameter determination device 10 according to an embodiment. The parameter determination device 10 is, for example, a computer. When a control parameter of an actuator 20 is input, the parameter determination device 10 determines whether an input parameter is appropriate. The details of the input parameter are described later. The parameter determination device 10 is connected to a controller 40 of the actuator 20 via a communication network 30.

The actuator 20 has a fixed member 50, a movable member 52, a motor 54, and a housing 56. The motor 54 is housed in the housing 56. The motor 54 is driven to move the movable member 52 with respect to the fixed member 50. A rotational movement of the motor 54 is converted into a linear movement via a linear motion mechanism (not shown), whereby the movable member 52 is moved. The linear mechanism is composed of, for example, a ball screw and a nut. The motor 54 may be a linear motor.

In the actuator 20 according to the present embodiment, the movable member 52 moves by sliding on the fixed member 50. That is, the movable member 52 is a slider. The movable member 52 that is a slider can move linearly while being loaded with a workpiece.

In the present embodiment, the movement of the movable member 52 from a movement start position S to a target position G is referred to as a stroke. The time required for the movable member 52 to reach the target position G from the movement start position S by means of the motor 54 in one stroke is referred to as cycle time Tc.

The movable member 52 is not limited to a slider. For example, the movable member 52 may be a rod that travels in a cylinder. The movable member 52 that is a rod can move linearly while being loaded with a workpiece. The movable member 52 may be a rotating table. The movable member 52 that is a rotating table can rotate and move while being loaded with a workpiece. The movable member 52 may be a gripper that holds a workpiece with a pair of fingers. The pair of fingers open and close and move, whereby the positioning for holding the workpiece is performed.

The controller 40 is connected to the actuator 20 by a cable 70. The controller 40 controls the actuator 20 by performing signal input/output with the actuator 20 via the cable 70. The controller 40 includes a processor and memory (not shown). The processor of the controller 40 executes programs stored in the memory using the control parameters stored in the memory. Thereby, the controller 40 controls the actuator 20 to move the movable member 52. The controller 40 also detects a current value of the motor 54. The controller 40 may be provided in the actuator 20.

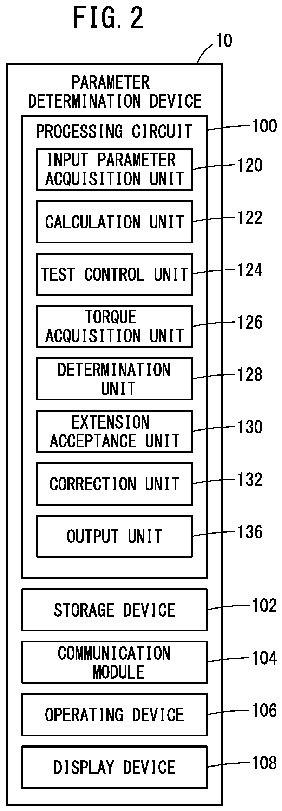

FIG. 2 is a block diagram illustrating a configuration of the parameter determination device 10. The parameter determination device 10 includes a processing circuit 100, a storage device 102, a communication module 104, an operating device 106, and a display device 108. The operating device 106 and the display device 108 may be external devices for the parameter determination device 10. The processing circuit 100 includes a processor such as a CPU or a GPU.

The storage device 102 includes volatile memory, such as RAM, and non-volatile memory, such as ROM or flash memory. The volatile memory is used as working memory for the processor. The non-volatile memory stores programs executed by the processor and other necessary data.

The communication module 104 is used for wired or wireless communication. The operating device 106 is, for example, a keyboard and a mouse, or a touch panel. The display device 108 is, for example, a liquid crystal display, an organic EL display, or a projector.

The processing circuit 100 includes an input parameter acquisition unit 120, a calculation unit 122, a test control unit 124, a torque acquisition unit 126, a determination unit 128, an extension acceptance unit 130, a correction unit 132, and an output unit 136. By the processing circuit 100 executing programs stored in the storage device 102, the input parameter acquisition unit 120, the calculation unit 122, the test control unit 124, the torque acquisition unit 126, the determination unit 128, the extension acceptance unit 130, the correction unit 132, and the output unit 136 are realized.

At least some of the input parameter acquisition unit 120, the calculation unit 122, the test control unit 124, the torque acquisition unit 126, the determination unit 128, the extension acceptance unit 130, the correction unit 132, and the output unit 136 may be implemented by an integrated circuit such as an ASIC or an FPGA, or an electronic circuit including a discrete device.

The user operates the operating device 106, thereby being able to input the input parameters concerning the target position G and the moving speed of the movable member 52 into the parameter determination device 10. The input parameter acquisition unit 120 acquires input parameters input by the user. The calculation unit 122 calculates the cycle time Tc based on the input parameters acquired by the input parameter acquisition unit 120.

The test control unit 124 outputs the input parameters acquired by the input parameter acquisition unit 120 to the controller 40 of the actuator 20 and instructs the controller 40 to perform a stroke test on the movable member 52. The controller 40 stores the input parameters output from the test control unit 124 in the memory as the control parameters of the actuator 20. The controller 40 controls the actuator 20 based on the control parameters stored in the memory and causes the motor 54 to move the movable member 52. During the cycle time Tc in which the movable member 52 moves from the movement start position S to the target position G, the controller 40 continuously detects the current value of the motor 54 via the cable 70.

It is preferable that the environment in which the above-described stroke test is performed is the same as the real environment in which the actual work using the actuator 20 is performed. For example, in a case where the movable member 52 moves while being loaded with a workpiece in the actual work using the actuator 20, the stroke test is also performed while the movable member 52 is loaded with a workpiece.

The torque acquisition unit 126 acquires the torque of the motor 54 driven in the stroke test. Specifically, the torque acquisition unit 126 acquires the current value of the motor 54 from the controller 40. The torque acquisition unit 126 calculates the torque of the motor 54 in the cycle time Tc based on the acquired current value of the motor 54. It should be noted that the torque acquisition unit 126 may acquire the torque of the motor 54 directly from the controller 40. In this case, the controller 40 calculates the torque of the motor 54 based on the current value of the motor 54.

The determining unit 128 determines the appropriateness of the input parameters acquired by the input parameter acquisition unit 120, based on the torque of the motor 54 acquired by the torque acquisition unit 126. For example, if a state where the torque of the motor 54 exceeds a predetermined value continues for a predetermined time or more, it is determined that the input parameters are inappropriate. Otherwise, it is determined that the input parameters are appropriate. When the torque of the motor 54 is higher than a predetermined value, there may occur a problem that the lifespan of the motor 54 shortens or the actuator 20 fails.

When the input parameters are determined to be appropriate by the determining unit 128, the cycle time Tc calculated by the calculation unit 122 based on the input parameters can be extended. The user instructs the parameter determination device 10 to extend the cycle time Tc by operating the operating device 106. The user inputs the value of the extended cycle time Tc into the parameter determination device 10 by operating the operating device 106. The extension acceptance unit 130 accepts the extension of the cycle time Tc by acquiring an instruction for extension of the cycle time Tc from the user.

The correction unit 132 corrects the input parameters based on the extended cycle time Tc. Specifically, among the input parameters, a parameter related to the moving speed of the movable member 52 is corrected based on the extended cycle time Tc. Since the cycle time Tc is extended, the motor 54 does not exceed the predetermined value because of the input parameter corrected based on the extended cycle time Tc. Therefore, the corrected input parameter is appropriate.

In a case where the input parameter is determined to be appropriate by the determining unit 128, the input parameter determined to be appropriate or the corrected input parameter can be used as a setting parameter for the actual work. The user performs the setting operation of the setting parameters for the actual work by using the operating device 106.

In a case where the setting operation of the setting parameters is performed by the user, the output unit 136 outputs, as the setting parameters for the actual work, the input parameters determined to be appropriate by the determination unit 128 to the controller 40. In a case where the input parameters are corrected by the correction unit 132, the output unit 136 outputs the corrected input parameters to the controller 40 as the setting parameters.

The controller 40 stores the setting parameters in the memory as the control parameters of the actuator 20. The processor of the controller 40 performs the actual work by controlling the actuator 20 (motor 54) based on the control parameters stored in the memory.

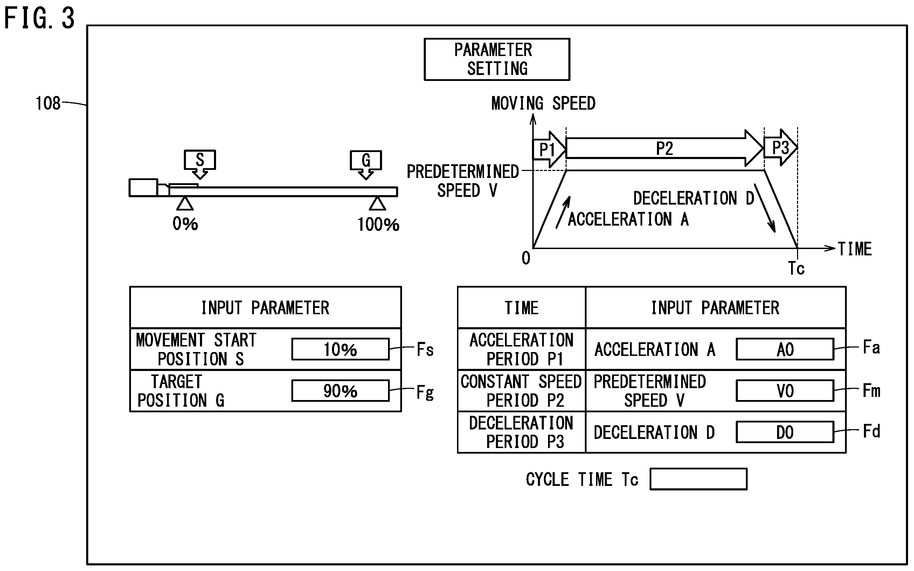

FIG. 3 is a diagram showing an example of a parameter setting screen in which the input parameters are input. The parameter setting screen shown in FIG. 3 is displayed on the display device 108. The input parameters to be input include the input parameter related to the target position G of the movable member 52 and the input parameter related to the moving speed of the movable member 52, as described above. In this embodiment, the input parameters to be input further include the movement start position S of the movable member 52.

The parameter setting screen shown in FIG. 3 is provided with a field Fs for inputting the value of the movement start position S and a field Fg for inputting the value of the target position G. The user inputs values to the field Fs of the movement start position S and the field Fg of the target position G by operating the operating device 106. The values input into the fields Fs and Fg are those given when the position of one end of two ends of the fixed member 50 with respect to which the movable member 52 is movable is set to 0% and the position of the other end is set to 100%.

In the example shown in FIG. 3, "10%" is entered in the field Fs of the movement start position S. In that case, the movement start position S of the movable member 52 is a position that is moved from one end of the fixed member 50 toward the other end by a distance corresponding to 10%. When the movement start position S is different from the current position of the movable member 52, the movable member 52 moves from the current position to the movement start position S and stops at the movement start position S. Thereafter, the movable member 52 starts to move from the movement start position S to the target position G. In this example, the moving direction of the movable member 52 is in the direction from one end of the fixed member 50 to the other end.

The current position of the movable member 52 may be the movement start position S. In this case, a value corresponding to the current position of the movable member 52 is automatically input in the field Fs of the movement start position S.

In the example shown in FIG. 3, "90%" is entered in the field Fg of the target position G. In that case, the target position G of the movable member 52 is a position that is moved from one end of the fixed member 50 toward the other end by a distance corresponding to 90%.

The value input to the field Fs of the movement start position S may be larger than the value input to the field Fg of the target position G. In this case, the moving direction of the movable member 52 is opposite to the above-described direction. In a case where the movement start position S is fixed, the field Fs of the movement start position S is unnecessary. In a case where the target position G is fixed, the field Fg of the target position G is unnecessary.

During an acceleration period P1 after the movable member 52 starts moving at the movement start position S, the moving speed of the movable member 52 accelerates from 0 with an acceleration A and reaches a predetermined speed V. In a subsequent constant speed period P2, the moving speed of the movable member 52 is maintained at the predetermined speed V. In a deceleration period P3, the moving speed of the movable member 52 decelerates from the predetermined speed V with a deceleration D and becomes 0 at the target position G.

In the present embodiment, the acceleration A in the acceleration period P1, the predetermined speed V in the constant speed period P2, and the deceleration D in the deceleration period P3 are input as the input parameters regarding the moving speed of the movable member 52. There is a case where a field Fa of the acceleration A and a field Fd of the deceleration D are not provided, depending on the type of the motor 54. In that case, the acceleration A and the deceleration D are automatically calculated based on the movement start position S, the target position G, and the predetermined speed V.

The parameter setting screen shown in FIG. 3 includes the field Fa for inputting the value of the acceleration A, a field Fm for inputting the value of the predetermined speed V, and the field Fd for inputting the value of the deceleration D. The user inputs values to the field Fa of acceleration A, the field Fm of predetermined speed V, and the field Fd of deceleration D by operating the operating device 106.

In the example shown in FIG. 3, "A0" is input in the field Fa of the acceleration A. In that case, during the acceleration period P1, the moving speed of the movable member 52 accelerates from 0 to the acceleration A = A0. In the example shown in FIG. 3, "V0" is input in the field Fm of the predetermined speed V. In this case, the moving speed of the movable member 52 is maintained at the predetermined speed V = V0 during the constant speed period P2. In the example shown in FIG. 3, "D0" is input in the field Fd for the deceleration D. In this case, during the deceleration period P3, the moving speed of the movable member 52 decelerates from the predetermined speed V = V0 to the deceleration D = D0.

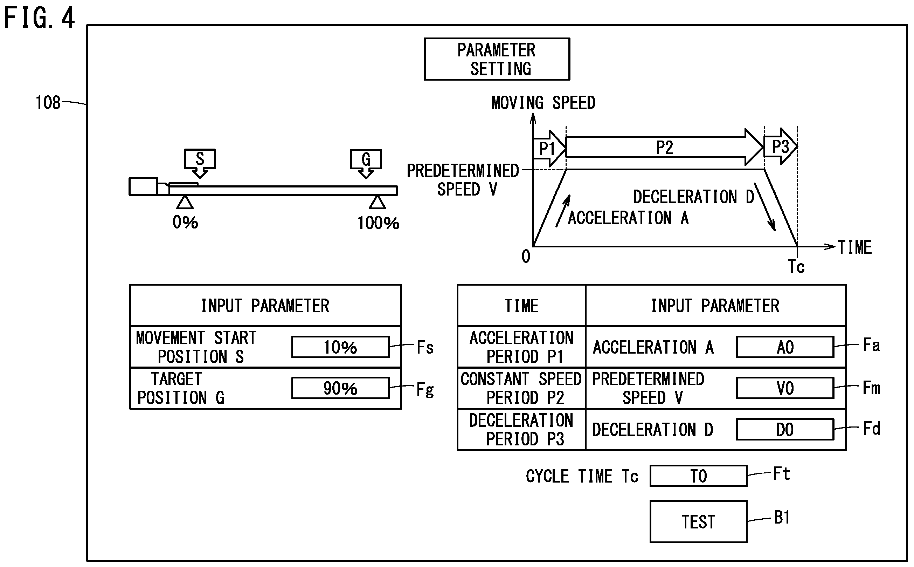

The input parameters shown in FIG. 3 are acquired by the above-described input parameter acquisition unit 120. The calculation unit 122 calculates the cycle time Tc based on the acquired input parameters. FIG. 4 is a diagram showing an example of a parameter setting screen for a user to instruct a stroke test based on input parameters. As shown in Fig. 4, the input parameters are displayed on the parameter setting screen. The parameter setting screen shown in FIG. 4 is displayed on the display device 108. In FIG. 4, the description of the display contents common to those in FIG. 3 is omitted.

The parameter setting screen shown in FIG. 4 is provided with a field Ft for displaying the calculated cycle time Tc. In the example shown in FIG. 4, "T0" is displayed in the field Ft of the cycle time Tc. That is, the cycle time Tc = T0 calculated by the calculation unit 122 is displayed in the field Ft. The calculated cycle time Tc is displayed, whereby the user can estimate the work time allocated to the actual work in which the actuator 20 is used.

The parameter setting screen shown in FIG. 4 includes a button B1 labeled "test" for instructing the controller 40 to perform a stroke test on the movable member 52. When the user operates the operating device 106 and selects the button B1, the test control unit 124 outputs to the controller 40 the input parameters displayed on the parameter setting screen shown in FIG. 4 and instructs the controller 40 to perform the stroke test on the movable member 52. The stroke test on the movable member 52 is performed based on the movement start position S, the target position G, the acceleration A, the predetermined speed V, and the deceleration D that have been input as input parameters.

During the cycle time Tc = T0 in which the stroke test on the movable member 52 is performed, the torque acquisition unit 126 acquires the torque of the motor 54 multiple times. The determination unit 128 determines the appropriateness of the input parameters based on the acquired torque of the motor 54.

When it is determined that an input parameter is not appropriate, a parameter setting screen similar to that in FIG. 3 is displayed on the display device 108. At that time, a message may be displayed on the display device 108 to prompt the user to change the input parameter. The user changes the input parameter on the parameter setting screen. Based on the changed input parameter, the cycle time Tc is calculated again by the calculation unit 122 and displayed on the same screen as that of FIG. 4. Based on the user's selection operation, the stroke test on the movable member 52 is performed again. The appropriateness of the input parameters is again determined.

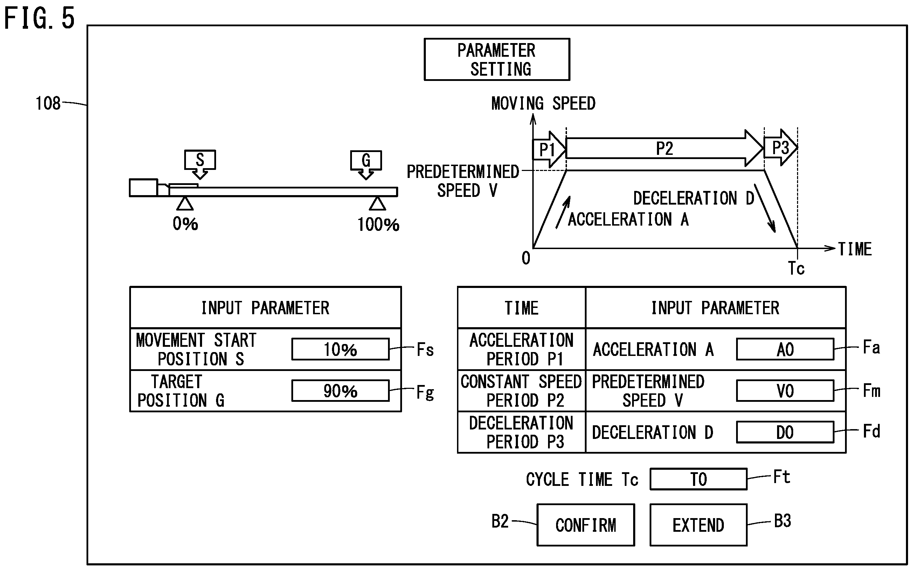

When the input parameter is determined to be appropriate by the determining unit 128, the parameter setting screen shown in FIG. 5 is displayed on the display device 108. FIG. 5 is a diagram showing an example of the parameter setting screen for the user to select whether to extend the cycle time Tc. As shown in FIG. 5, the input parameters and the cycle time Tc are displayed on the parameter setting screen. The parameter setting screen shown in FIG. 5 is displayed on the display device 108. In FIG. 5, the description of the display contents common to those in FIG. 3 or FIG. 4 is omitted.

The parameter setting screen shown in FIG. 5 is provided with a button B2 displayed as "CONFIRM" with which the cycle time Tc is determined without extension. The cycle time Tc is determined when the user operates the operating device 106 and selects the button B2.

The operation of selecting the button B2 by the user corresponds to the setting operation of the setting parameters of the actuator 20. The input parameters determined to be appropriate corresponding to the cycle time Tc are output to the controller 40 by the output unit 136 as a setting parameters of the actuator 20. The controller 40 uses the setting parameter s as control parameters of the actuator 20 to perform the actual work in which the actuator 20 is used.

The parameter setting screen shown in FIG. 5 is provided with a button B3 displayed as "EXTEND" for accepting the extension of the cycle time Tc. The user can instruct the extension of the cycle time Tc by operating the operating device 106 and selecting the button B3. The extension acceptance unit 130 accepts extension of the cycle time Tc by acquiring the extension instruction.

The user can change the value T0 displayed in the field Ft of the cycle time Tc to a larger value after selecting the button B3. The extension of the cycle time Tc can further suppress the occurrence of the defects such as the shortening of the lifespan of the motor 54 or the failure of the actuator 20.

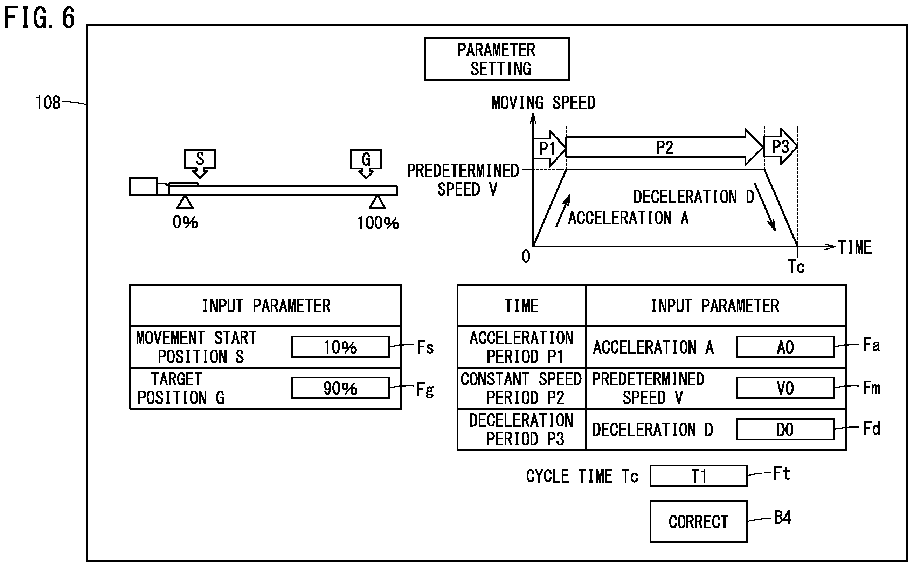

It is assumed here that the value T0 of the cycle time Tc is changed to a value T1 that is larger than the value T0. FIG. 6 is a diagram showing an example of the parameter setting screen displayed when the cycle time Tc is extended. As shown in FIG. 6, the input parameters and the changed cycle time Tc are displayed on the parameter setting screen.

The parameter setting screen shown in FIG. 6 is displayed on the display device 108. In FIG. 6, the description of the display contents common to those in FIG. 3, FIG. 4, or FIG. 5 is omitted. The parameter setting screen shown in FIG. 6 is provided with a button B4 displayed as "CORRECT" for correcting the input parameters based on the extended cycle time Tc. When the user operates the operating device 106 and selects the button B4, the acceleration A, the predetermined speed V, and the deceleration D among the input parameters are corrected by the correction unit 132.

When the cycle time Tc is changed to the value T1, the correction of the input parameters may be automatically performed by the correction unit 132. In this case, the parameter setting screen shown in FIG. 6 including the button B4 does not need to be displayed.

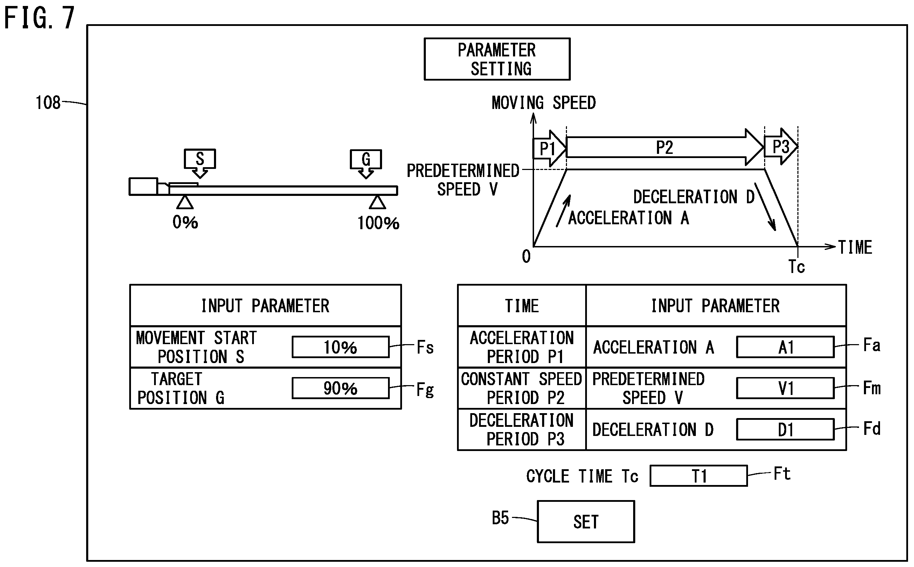

FIG. 7 is a diagram showing an example of the parameter setting screen for outputting corrected input parameters to the controller 40 as setting parameters of the actuator 20. As shown in FIG. 7, the input parameters and the cycle time Tc are displayed on the parameter setting screen. The parameter setting screen shown in FIG. 7 is displayed on the display device 108. In FIG. 7, the description of the display contents common to those in FIG. 3, FIG. 4, FIG. 5, or FIG. 6 is omitted.

In the example shown in FIG. 7, "A1" is displayed as a corrected acceleration A in the field Fa of the acceleration A. In the field Fm of the predetermined speed V, "V1" is displayed as the corrected predetermined speed V. In the field Fd of the deceleration D, "D1" is displayed as the corrected deceleration D.

In addition, a button B5 labeled "SET" is provided on the parameter setting screen shown in FIG. 7. The user operates the operating device 106 and selects the button B5, whereby the corrected input parameters determined to be appropriate are output to the controller 40 by the output unit 136 as the setting parameters of the actuator 20.

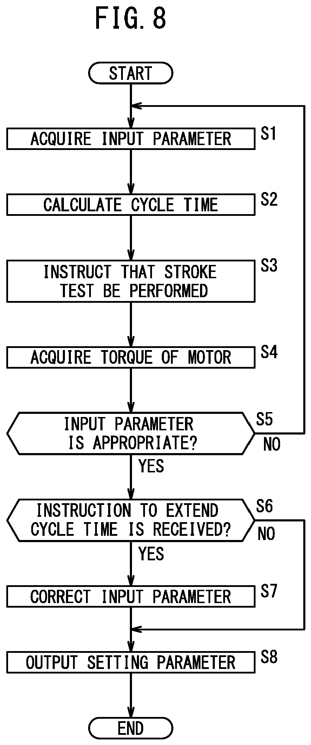

FIG. 8 is a flowchart showing a processing procedure of a control parameter appropriateness determination process performed by the parameter determination device 10. The processing procedure is performed by the processing circuit 100 of the parameter determination device 10 executing a program stored in the storage device 102. The program is stored in the storage device 102 by installing a computer program recorded on a computer-readable recording medium in a computer used as the parameter determination device 10.

When the processing procedure is started, in step S1, the input parameter acquisition unit 120 acquires the input parameters input by the user. In step S2, the calculation unit 122 calculates the cycle time Tc based on the input parameters acquired in step S1. In step S3, the test control unit 124 instructs the controller 40 to perform the stroke test on the movable member 52 based on the input parameters acquired in step S1.

In step S4, the torque acquisition unit 126 acquires the torque of the motor 54 in the cycle time Tc. In step S5, the determination unit 128 determines whether the input parameters acquired in step S1 is appropriate, based on the torque of the motor 54 acquired in step S4. If a result is YES in step S5, the processing procedure proceeds to step S6. If the result is NO in step S5, the processing procedure returns to step S1.

In step S6, the extension acceptance unit 130 determines whether or not an instruction to extend the cycle time Tc from the user has been accepted. When the user selects the button B3 displayed as "EXTEND" shown in FIG. 5, the instruction to extend the cycle time Tc is accepted and the process in step S6 yields YES.

When the user selects the button B2 displayed as "CONFIRM" shown in FIG. 5, the process in step S6 yields NO. The selection operation of the button B2 corresponds to the setting operation in which the input parameter is set as a setting parameter of the actuator 20. If a result is YES in step S6, the processing procedure goes to step S7. If the result is NO in step S6, the processing procedure proceeds to step S8.

In step S7, the correction unit 132 corrects the input parameters based on the extended cycle time Tc. Furthermore, a setting operation is performed in which the corrected input parameters are set as the setting parameters of the actuator 20. The setting operation corresponds to an operation in which the button B5 displayed as "SETTING" shown in FIG. 7 is selected by the user. In step S8, the output unit 136 outputs the input parameters to the controller 40 as the setting parameters for the actual work. When the process of step S8 is completed, the present processing procedure ends.

In this embodiment, the stroke test on the movable member 52 is performed based on the input parameters input by the user. The appropriateness of the input parameters is determined based on the torque of the motor 54 in the cycle time Tc of the stroke test. As a result, the appropriate control parameters of the actuator 20 can be determined. In this case, information of the workpiece (weight, posture, load, etc.) is unnecessary.

After the input parameters are determined to be appropriate by the determining unit 128, the user may operate the operating device 106 to instruct the parameter determination device 10 to shorten the cycle time Tc. In this case, the acceleration A, the predetermined speed V, and the deceleration D among the input parameters are corrected according to the shortening of the cycle time Tc. Subsequently, the stroke test is performed again. The appropriateness of the corrected input parameters is determined based on the torque of the motor 54 in the cycle time Tc of the stroke test.

### [INVENTION DERIVED FROM EMBODIMENT]

The invention that can be understood from the above embodiment will be described below.

(1) A parameter determination device (10) for an actuator (20) including a fixed member (50), a movable member (52) movable with respect to the fixed member, and a motor (54) configured to move the movable member, includes: an input parameter acquisition unit (120) configured to acquire an input parameter related to a target position (G) and a moving speed of the movable member; a torque acquisition unit (126) configured to acquire, as a result of the motor moving the movable member based on the input parameter, torque of the motor in a cycle time (Tc) that ranges from when the movable member starts movement to when the movable member arrives at the target position; and a determination unit (128) configured to determine whether the input parameter is appropriate, based on the torque. This allows to determine suitable control parameters of the actuators.
(2) The parameter determination device may further include an output unit (136) configured to, in a case where the input parameter is determined to be appropriate, output, as a setting parameter of the actuator, the input parameter to a controller (40) of the actuator. This allows the controller of the actuator to perform the actual work with the actuator based on the appropriate control parameters.
(3) The parameter determination device may further include an extension acceptance unit (130) configured to accept an extension of the cycle time that is based on the input parameter, in a case where the input parameter is determined to be appropriate; and a correction unit (132) configured to correct the input parameter based on the cycle time that has been extended. This can further suppress the occurrence of defects such as a shortened lifespan of the motor or a failure of the actuator.
(4) The input parameter may include a movement start position (S) of the movable member, and the torque acquisition unit may acquire the torque in the cycle time from when the movable member starts the movement at the movement start position to when the movable member arrives at the target position by means of the motor. Thus, the movement start position of the movable member can be set to an arbitrary position.
(5) A parameter determination method for an actuator (20) including a fixed member (50), a movable member (52) movable with respect to the fixed member, and a motor (54) configured to move the movable member includes: an input parameter acquisition step of acquiring an input parameter related to a target position (G) and a moving speed of the movable member; a torque acquisition step of acquiring, as a result of the motor moving the movable member based on the input parameter, torque of the motor in a cycle time (Tc) that ranges from when the movable member starts movement to when the movable member arrives at the target position; and a determination step of determining whether the input parameter is appropriate, based on the torque. This allows to determine suitable control parameters of the actuators.
(6) The parameter determination method may further include an output step of, in a case where the input parameter is determined to be appropriate, outputting, as a setting parameter of the actuator, the input parameter to a controller (40) of the actuator. This can increase the lifespan of the motor and prevent actuator failure.
(7) The parameter determination method may further include an extension acceptance step of accepting an extension of the cycle time that is based on the input parameter, in a case where the input parameter is determined to be appropriate; and a correction step of correcting the input parameter based on the cycle time that has been extended. This can further suppress the occurrence of defects such as a shortened lifespan of the motor or a failure of the actuator.
(8) The input parameter may include a movement start position (S) of the movable member, and in the torque acquisition step, the torque in the cycle time from when the movable member starts the movement at the movement start position to when the movable member arrives at the target position by means of the motor may be acquired. Thus, the movement start position of the movable member can be set to an arbitrary position.

The present invention is not limited to the above-described disclosure, and various configurations can be adopted without departing from the scope of the present invention.

### REFERENCE SIGNS LIST

- 10:: Parameter determination device
- 20:: Actuator
- 30:: Communication network
- 40:: Controller
- 50:: Fixed member
- 52:: Movable member
- 54:: Motor
- 56:: Housing
- 70:: Cable
- 100:: Processing Circuit
- 102:: Storage device
- 104:: Communication module
- 106:: Operating device
- 108:: Display device
- 120:: Input parameter acquisition unit
- 122:: Calculation unit
- 124:: Test control unit
- 126:: Torque acquisition unit
- 128:: Determination unit
- 130:: Extension acceptance unit
- 132:: Correction unit
- 136:: Output unit

## Claims

1. A parameter determination device (10) for an actuator (20) including a fixed member (50), a movable member (52) movable with respect to the fixed member, and a motor (54) configured to move the movable member, the parameter determination device comprising:
an input parameter acquisition unit (120) configured to acquire an input parameter related to a target position (G) and a moving speed of the movable member;
a torque acquisition unit (126) configured to acquire, as a result of the motor moving the movable member based on the input parameter, torque of the motor in a cycle time (Tc) that ranges from when the movable member starts movement to when the movable member arrives at the target position; and
a determination unit (128) configured to determine whether the input parameter is appropriate, based on the torque.

2. The parameter determination device according to claim 1, further comprising an output unit (136) configured to, in a case where the input parameter is determined to be appropriate, output, as a setting parameter of the actuator, the input parameter to a controller (40) of the actuator.

3. The parameter determination device according to claim 1 or 2, further comprising:
an extension acceptance unit (130) configured to accept an extension of the cycle time that is based on the input parameter, in a case where the input parameter is determined to be appropriate; and
a correction unit (132) configured to correct the input parameter based on the cycle time that has been extended.

4. The parameter determination device according to claim 1 or 2,
wherein the input parameter includes a movement start position (S) of the movable member, and
the torque acquisition unit acquires the torque in the cycle time from when the movable member starts the movement at the movement start position to when the movable member arrives at the target position by means of the motor.

5. A parameter determination method for an actuator (20) including a fixed member (50), a movable member (52) movable with respect to the fixed member, and a motor (54) configured to move the movable member, the parameter determination method comprising:
an input parameter acquisition step of acquiring an input parameter related to a target position (G) and a moving speed of the movable member;
a torque acquisition step of acquiring, as a result of the motor moving the movable member based on the input parameter, torque of the motor in a cycle time (Tc) that ranges from when the movable member starts movement to when the movable member arrives at the target position; and
a determination step of determining whether the input parameter is appropriate, based on the torque.

6. The parameter determination method according to claim 5, further comprising an output step of, in a case where the input parameter is determined to be appropriate, outputting, as a setting parameter of the actuator, the input parameter to a controller (40) of the actuator.

7. The parameter determination method according to claim 5 or 6, further comprising:
an extension acceptance step of accepting an extension of the cycle time that is based on the input parameter, in a case where the input parameter is determined to be appropriate; and
a correction step of correcting the input parameter based on the cycle time that has been extended.

8. The parameter determination method according to claim 5 or 6,
wherein the input parameter includes a movement start position (S) of the movable member, and
in the torque acquisition step, the torque in the cycle time from when the movable member starts the movement at the movement start position to when the movable member arrives at the target position by means of the motor is acquired.
